# EUROPÄISCHE PATENTANMELDUNG

(11) **EP 3 800 721 A1**
(43) Veröffentlichungstag der Anmeldung: **07.04.2021**
(21) Anmeldenummer: 19200689.8
(22) Anmeldetag: 01.10.2019
(51) Int. Cl.: H01M 10/42

(54) **VORRICHTUNG ZUM ERFASSEN EINES KRITISCHEN STURZES**

(71) Anmelder: Hilti Aktiengesellschaft, 9494 Schaan (LI)
(72) Erfinder: Goyal, Varnim, 86916 Kaufering (DE); Ziegler, Bernd, 86830 Schabmünchen (DE)
(74) Vertreter: Hilti Aktiengesellschaft Corporate Intellectual Property

(57) **Zusammenfassung**

Vorrichtung mit wenigstens einer Spannungsmesseinrichtung. Die Vorrichtung enthält einen Trägheitskörper, der durch drei elektrische Leiter entlang der drei Hauptträgheitsachsen des Trägheitskörpers gehalten wird, wobei an jeder der drei elektrischen Leiter eine elektrische Spannung anliegt und so ausgestaltet sind, dass beim Erreichen eines vorbestimmten Beschleunigungsschwellwerts für den Trägheitskörper die Leitfähigkeit wenigstens eines elektrischen Leiters so beeinträchtigt wird, dass das Erreichen eines vorbestimmten Schwellwerts für wenigstens eine elektrische Spannung von der Spannungsmesseinrichtung erfassbar ist.

Akkumulator mit einer Vorrichtung zum Erfassen eines kritischen Sturzes.

Verfahren mit Erfassen von drei elektrischen Spannung, die jeweils an drei Leiter anliegt, wobei der erste Leiter entlang einer ersten Hauptträgheitsachse eines Trägheitskörpers, der zweite Leiter entlang einer zweiten Hauptträgheitsachse eines Trägheitskörpers und der dritte Leiter entlang einer dritten Hauptträgheitsachse verläuft und Erfassen eines vorbestimmten Schwellwerts für die erste, zweite oder dritte elektrische Spannung durch wenigstens eine Spannungsmesseinrichtung, wenn die Leitfähigkeit wenigstens eines Leiters beeinträchtigt wird.

## Beschreibung

Die vorliegende Erfindung betrifft eine Vorrichtung zum Erfassen eines kritischen Sturzes mit wenigstens einer Spannungsmesseinrichtung.

Darüber hinaus betrifft die vorliegende Erfindung ein Verfahren zum Erfassen eines kritischen Sturzes.

Des Weiteren betrifft die vorliegende Erfindung einen Akkumulator mit einer Vorrichtung zum Erfassen eines kritischen Sturzes enthaltend eine Steuerungselektronik mit wenigstens einer Spannungsmesseinrichtung, wobei der Akkumulator eine Steuerungseinrichtung mit einer Entladeeinrichtung sowie wenigstens eine Energiespeichereinrichtung enthält.

Moderne Werkzeugmaschinen, wie beispielsweise Bohrhämmer, Sägen, Schleifgeräte oder dergleichen, sowie Akkumulatoren, die als Energieversorgung mit den Werkzeugmaschinen verbunden werden können, sind üblicherweise sehr robust gestaltet und weisen kaum Beschädigungen nach einem Sturz auf.

Nach einem tiefen Sturz aus einer besonders hohen Höhe auf einen harten bzw. nicht elastischen Boden können jedoch durchaus Beschädigungen an der Werkzeugmaschine und/oder einem Akkumulator entstehen. Diese Beschädigungen sind ggf. für einen Anwender der Werkzeugmaschine und/oder des Akkumulators nicht direkt sichtbar oder bemerkbar. Eine von einem Anwender nicht sichtbare oder nicht merkbare Beschädigung an der Werkzeugmaschine und/oder des Akkumulators kann jedoch ein Problem darstellen, da die Funktionalität bzw. Funktionsweise der Werkzeugmaschine und/oder des Akkumulators möglicherweise nicht mehr gegeben ist. Für den Anwender ist es jedoch nicht immer einwandfrei feststellbar, ob ein Sturz bzw. ein Herunterfallen einer der Werkzeugmaschine und/oder des Akkumulators eine Beschädigung verursacht hat und ob die weitere Benutzung der Werkzeugmaschine und/oder des Akkumulators nach wie vor ausreichend sicher ist.

Aufgabe der vorliegenden Erfindung ist es daher, eine Vorrichtung zum Erfassen eines kritischen Sturzes mit wenigstens einer Spannungsmesseinrichtung, einen Akkumulator bzw. ein Verfahren zum Erfassen eines kritischen Sturzes bereitzustellen, mit dem das vorstehend genannte Problem gelöst und ein kritischer Sturz bzw. Herunterfallen eindeutig erfasst werden kann.

Die Aufgabe wird gelöst durch den Gegenstand des unabhängigen Anspruchs 1, 4 und 6. Weitere vorteilhafte Ausgestaltungsformen der Erfindung finden sich in den entsprechenden Unteransprüchen.

Die Aufgabe wird insbesondere gelöst durch eine Vorrichtung zum Erfassen eines kritischen Sturzes mit wenigstens einer Spannungsmesseinrichtung.

Erfindungsgemäß enthält die Vorrichtung wenigstens einen Trägheitskörper, der durch drei elektrische Leiter entlang der drei Hauptträgheitsachsen des Trägheitskörpers gehalten wird, wobei an jeder der drei elektrischen Leiter eine elektrische Spannung anliegt und die drei elektrischen Leiter so ausgestaltet sind, dass beim Erreichen eines vorbestimmten Beschleunigungsschwellwerts für den Trägheitskörper die Leitfähigkeit wenigstens eines elektrischen Leiters so beeinträchtigt wird, dass das Erreichen eines vorbestimmten Schwellwerts für wenigstens eine elektrische Spannung von der Spannungsmesseinrichtung erfassbar ist.

Ein Sturz aus einer kritischen (d.h. großen) Höhe führt zu einem plötzlichen und relativ starken Abbremsen des fallenden Objekts am Untergrund, auf den die Vorrichtung aufschlägt. Dieses Abbremsen am Untergrund entspricht einer starken Beschleunigung der fallenden Vorrichtung. Je tiefer der Sturz, desto größer die Beschleunigung der Vorrichtung. Der durch die ausreichend große Beschleunigung in Bewegung versetzte Trägheitskörper lässt die elektrischen Leiter zerreißen, wodurch keine elektrische Spannung mehr gemessen wird. In dem Falle, dass keine Spannung mehr in wenigstens einer Leiter gemessen wird, kann von einer ausreichend großen Beschleunigung und folglich von einem kritischen Sturz der Vorrichtung ausgegangen werden. Die drei elektrischen Leiter bilden dabei drei unterschiedliche Stromkreise. Bei einer ausreichenden Beeinträchtigung der Leitfähigkeit eines elektrischen Leiters kann zu einer Unterbrechung des entsprechenden Stromkreises führen.

Bei dem Trägheitskörper kann es sich um eine Kugel handeln. Der als Kugel ausgestalte Trägheitskörper kann dabei drei Durchgänge für jeweils einen der drei Leiter enthalten, wobei die drei Durchgänge orthogonal zueinander angeordnet sein können.

Gemäß einer vorteilhaften Ausführungsform der vorliegenden Erfindung kann es möglich sein, dass beim Erreichen eines vorbestimmten Beschleunigungsschwellwerts für den Trägheitskörper wenigstens ein elektrischer Leiter unterbrochen wird. Ein Unterbrechen eines elektrischen Leiters führt zu einem vollständigen Spannungsabfall in dem elektrischen Leiter bzw. in dem entsprechenden Stromkreis, sodass eindeutig eine ausreichend große Beschleunigung und folglich ein kritischer Sturz der Vorrichtung geschehen ist.

Entsprechend einer weiteren vorteilhaften Ausführungsform der vorliegenden Erfindung kann es möglich sein, dass eine Signaleinrichtung enthalten ist, durch die beim Erreichen eines vorbestimmten Schwellwerts für wenigstens eine elektrische Spannung wenigstens ein Signal ausgesendet wird. Hierdurch kann dem Anwender der Vorrichtung effektiv ein kritischer Sturz der Vorrichtung angezeigt werden. Bei der Signaleinrichtung kann es sich um eine LED-Anzeige, einen akustischen Signalgeber oder um eine Funkeinrichtung handeln. Es ist dabei möglich, dass die Funkeinrichtung in Form von Bluetooth, NFC (Near Field Communication) oder einer anderen geeigneten drahtlosen Kommunikationstechnologie ausgestaltet ist.

Darüber hinaus wird die Aufgabe gelöst durch einen Akkumulator mit einer Vorrichtung zum Erfassen eines kritischen Sturzes enthaltend eine Steuerungselektronik mit wenigstens einer Spannungsmesseinrichtung, wobei der Akkumulator eine Steuerungseinrichtung mit einer Entladeeinrichtung sowie wenigstens eine Energiespeichereinrichtung enthält.

Erfindungsgemäß ist vorgesehen, dass die Vorrichtung zum Erfassen eines kritischen Sturzes wenigstens einen Trägheitskörper enthält, der durch drei elektrische Leiter entlang der drei Hauptträgheitsachsen des Trägheitskörpers gehalten wird, wobei an jeder der drei elektrischen Leiter eine elektrische Spannung anliegt und die drei elektrischen Leiter so ausgestaltet sind, dass beim Erreichen eines vorbestimmten Beschleunigungsschwellwerts für den Trägheitskörper die Leitfähigkeit wenigstens eines elektrischen Leiters so beeinträchtigt wird, dass das Erreichen eines vorbestimmten Schwellwerts für wenigstens eine elektrische Spannung von der Spannungsmesseinrichtung erfassbar ist.

Gemäß einer vorteilhaften Ausführungsform der vorliegenden Erfindung kann es möglich sein, dass die wenigstens eine Energiespeichereinrichtung durch die Entladeeinrichtung wenigstens teilweise entladen wird, wenn das Erreichen eines vorbestimmten Schwellwerts für wenigstens eine elektrische Spannung von der Spannungsmesseinrichtung erfassbar ist. Hierdurch kann die weitere Verwendung des Akkumulators als Energieversorgung verhindert werden und gleichzeitig dem Anwender des Akkumulators angezeigt werden, dass eine mögliche Beschädigung des Akkumulators vorliegt.

Die Entladevorrichtung kann durch wenigstens einen Kondensator, wenigstens einen Transistor und/oder wenigstens einen elektrischen Widerstand ausgestaltet sein.

Entsprechend einer weiteren vorteilhaften Ausführungsform der vorliegenden Erfindung kann es möglich sein, dass die Steuerungselektronik und/oder Steuerungseinrichtung ausgestaltet ist, dass ein Laden der wenigstens einen Energiespeichereinrichtung mit elektrischer Energie verhindert wird, wenn das Erreichen eines vorbestimmten Schwellwerts für wenigstens eine elektrische Spannung von der Spannungsmesseinrichtung erfassbar ist.

Des Weiteren wird die Aufgabe gelöst durch ein Verfahren zum Erfassen eines kritischen Sturzes. Erfindungsgemäß enthält das Verfahren die folgenden Verfahrensschritte
- Erfassen einer ersten, zweiten und dritten elektrischen Spannung, die jeweils an einem ersten, zweiten und dritten elektrischen Leiter anliegt, wobei der erste Leiter entlang einer ersten Hauptträgheitsachse eines Trägheitskörpers, der zweite Leiter entlang einer zweiten Hauptträgheitsachse eines Trägheitskörpers und der dritte Leiter entlang einer dritten Hauptträgheitsachse eines Trägheitskörpers verläuft; und
- Erfassen eines vorbestimmten Schwellwerts für die erste, zweite oder dritte elektrische Spannung durch wenigstens eine Spannungsmesseinrichtung, wenn beim Erreichen eines vorbestimmten Beschleunigungsschwellwerts für den Trägheitskörper die Leitfähigkeit wenigstens eines elektrischen Leiters beeinträchtigt wird.

Gemäß einer vorteilhaften Ausführungsform der vorliegenden Erfindung kann es möglich sein, dass wenigstens eines Signals durch eine Signaleinrichtung ausgesendet wird, wenn ein vorbestimmter Schwellwert für wenigstens eine elektrische Spannung erfassbar ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine perspektivische Ansicht auf einen Akkumulator mit einer erfindungsgemäßen Vorrichtung;
- Figur 2: eine schematische Ansicht auf die erfindungsgemäße Vorrichtung in einem ersten Zustand;
- Figur 3: eine schematische Ansicht auf die erfindungsgemäße Vorrichtung in einem zweiten Zustand; und
- Figur 4: die schematische Ansicht auf die erfindungsgemäße Vorrichtung in dem ersten Zustand zusammen mit drei Stromkreisen sowie einer Steuerungseinrichtung.

### Ausführu nasbeispiele:

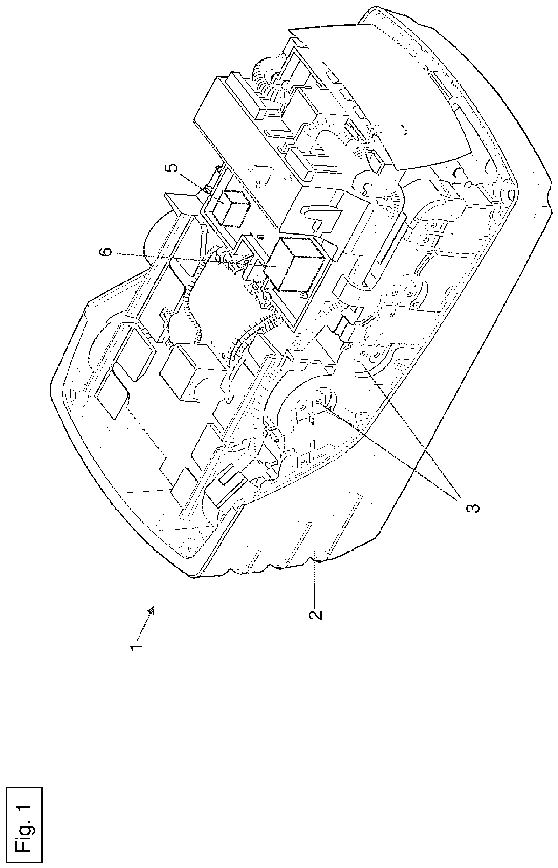

In Figur 1 ist ein Akkumulator 1 dargestellt. Der Akkumulator 1 kann beispielsweise mit einer Werkzeugmaschine wiederlösbar verbunden werden, um die Werkzeugmaschine mit elektrischer Energie zu versorgen. Die Werkzeugmaschine ist in den Figuren nicht dargestellt.

Der Akkumulator 1 enthält dabei im Wesentlichen ein Gehäuse 2, eine Anzahl an Energiespeicherzellen 3, eine Entladeeinrichtung 4 sowie eine Steuerungseinrichtung 5. Die Energiespeicherzellen 3 dienen zum Aufnahmen, Speichern und Angeben von elektrischer Energie bzw. elektrischer Spannung. Die Entladeeinrichtung 4 ist in Form eines leistungsstarken Kondensators ausgestaltet und dient zum kontrollierten Entladen der Energiespeicherzellen 3, d.h. das Entfernen der elektrischen Energie aus den Energiespeicherzellen 3. Die Steuerungseinrichtung 5 dient zum Steuern und Regeln verschiedener Funktionen der einzelnen Komponenten des Akkumulators 1 bzw. des gesamten Akkumulators 1.

Die Energiespeicherzellen 3 können auch als Akku-Zellen bezeichnet werden und können auf einer Lithium-Ionen-Technologie basieren.

Darüber hinaus enthält der Akkumulator 1 eine Vorrichtung 6 zum Erfassen eines kritischen Sturzes. Wie in Figur 1 angedeutet ist die Vorrichtung 6 zum Erfassen eines kritischen Sturzes mit der Steuerungseinrichtung 5 des Akkumulators 1 verbunden. Die Steuerungseinrichtung 5 ist so mit den Akku-Zellen 3 verbunden, dass elektrische Energie von den Akku-Zellen 3 zu der Steuerungseinrichtung 5 gelangen kann. Durch die Verbindung mit der Steuerungseinrichtung 5 wird die Vorrichtung 6 mit einer ersten, zweiten und dritten elektrischen Spannung V1, V2, V3 versorgt. Darüber hinaus können Daten und Informationen in Form von Signalen zwischen der Vorrichtung 6 und der Steuerungseinrichtung 5 des Akkumulators 1 ausgetauscht werden.

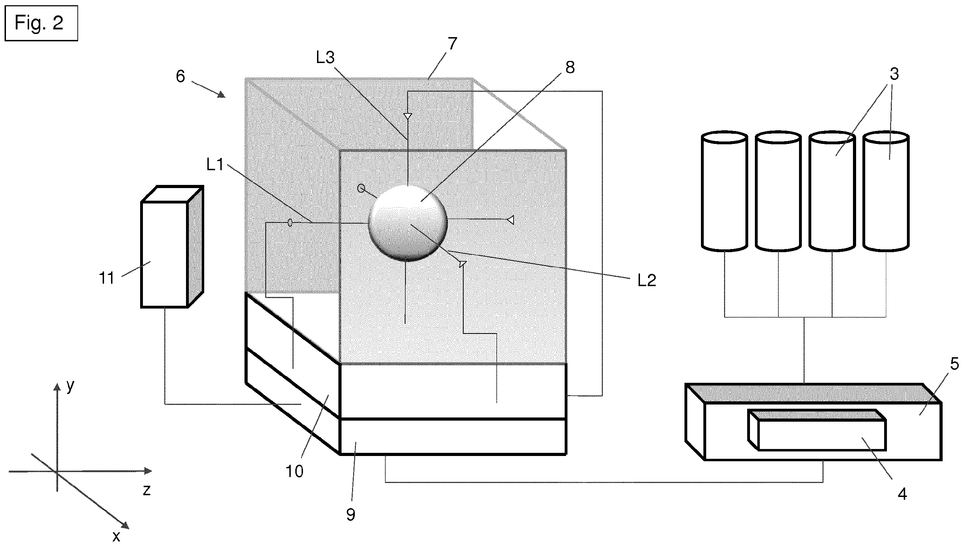

In Figur 2 ist die Vorrichtung 6 zum Erfassen eines kritischen Sturzes in einem ersten Ausführungsbeispiel dargestellt. Die Vorrichtung 6 enthält dabei im Wesentlichen einen Rahmen 7, einen Trägheitskörper 8, einen ersten, zweiten und dritten elektrischen Leiter L1, L2, L3, eine Steuerungselektronik 9 sowie eine Spannungsmesseinrichtung 10. Die Steuerungselektronik 9 und die Steuerungseinrichtung 5 sind miteinander zum Austausch von Daten und Informationen in Form von Signalen verbunden. Die elektrischen Leiter L1, L2, L3 können auch als Kabel oder Leitungen bezeichnet werden und bestehen wenigstens teilweise aus einem leitfähigen Werkstoff (z.B. Kupfer), um einen elektrischen Strom fließen zu lassen.

Der Rahmen 7 enthält eine erste, zweite, dritte, vierte, fünfte, sechste, siebte, achte, neunte, zehnte, elfte und zwölfte Rahmenkante. Gemäß einer alternativen Ausgestaltungsform kann anstelle des Rahmens 7 auch ein wenigstens teilweise geschlossener Behälter bzw. Kiste vorgesehen sein.

In dem gezeigten Ausführungsbeispiel ist der Trägheitskörper 8 als Kugel ausgestaltet. Es ist jedoch auch möglich, dass der Trägheitskörper 8 in einer anderen geometrischen Form, beispielsweise als Quader oder Würfel ausgestaltet ist.

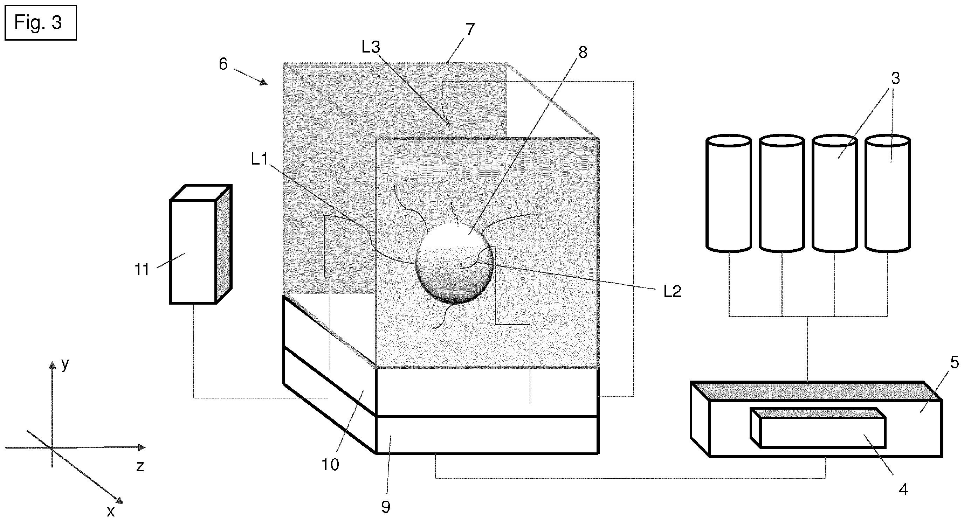

Die Spannungsmesseinrichtung 10 ist gegen der Richtung y unterhalb des Rahmens 7 positioniert und fest mit dem Rahmen 7 verbunden (vgl. Figur 2 und 3). Gemäß einer alternativen Ausgestaltung kann die Spannungsmesseinrichtung 10 auch an einer Anstelle mit dem Rahmen 7 verbunden sein. Es ist auch möglich, dass die Spannungsmesseinrichtung 10 von dem Rahmen 7 räumlich getrennt positioniert ist.

Wie in Figur 2 und 3 gezeigt, ist der als Kugel ausgestaltete Trägheitskörper 8 im Zentrum (d.h. im Mittelpunkt) des Rahmens 7 positioniert. Damit der Trägheitskörper 8 im Zentrum des Rahmens 7 gehalten wird, enthält der Trägheitskörper 8 einen ersten, zweiten und dritten Durchgang. Die Durchgänge können auch als Durchgangsbohrungen bezeichnet werden. Die drei Durchgänge des Trägheitskörpers 8 sind jeweils orthogonal zueinander angeordnet. Mit anderen Worten: der erste Durchgang erstreckt sich in z-Richtung, der zweite Durchgang erstreckt sich in x-Richtung und der dritte Durchgang erstreckt sich in y-Richtung. Die drei Durchgänge sind in den Figuren nicht dargestellt.

Durch den ersten Durchgang ist der erste elektrische Leiter L1 in z-Richtung geführt, durch den zweiten Durchgang ist der zweite Leiter in x-Richtung geführt und durch den dritten Durchgang ist der dritte Leiter in y-Richtung geführt. Die drei Leiter L1, L2, L3 verlaufen damit jeweils orthogonal (d.h. in einem nahezu rechten Winkel) zueinander.

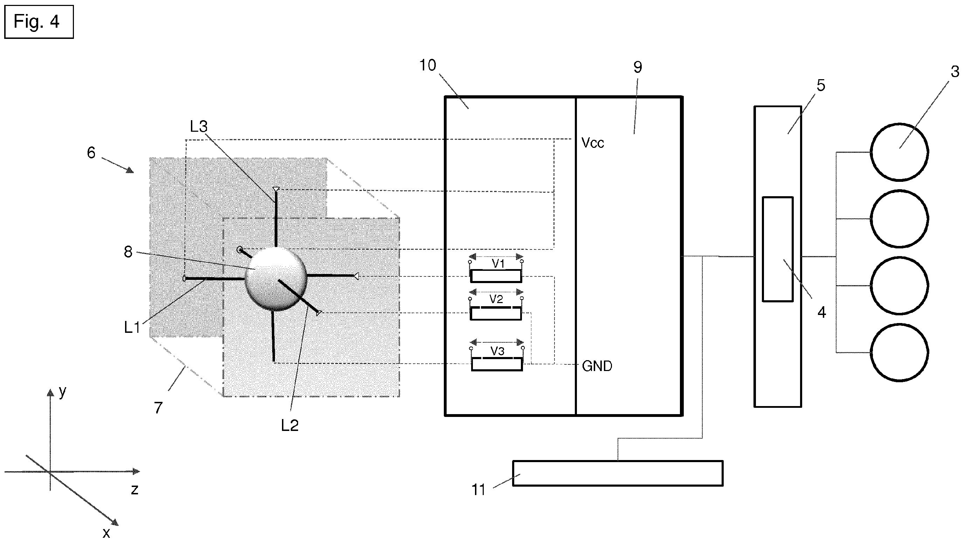

An jeweils zwei Stellen ist der erste, zweite und dritte Leiter L1, L2, L3 so mit dem Rahmen verbunden, dass der als Kugel ausgestaltete Trägheitskörper 8, durch den die drei Leiter L1, L2, L3 verlaufen, im Zentrum des Rahmens 7 gehalten wird. Die drei Leiter L1, L2, L3 weisen dabei eine gewisse mechanische Spannung bzw. einen gewissen Zug auf. Die genaue Stelle bzw. Anbringung der drei Leiter L1, L2, L3 an dem Rahmen 7 ist in den Figuren nicht dargestellt. Wie in den Figuren 2 bis 4 angedeutet sind die jeweiligen Ende des ersten, zweiten und dritten Leiters L1, L2, L3 mit der Spannungsmesseinrichtung 10 verbunden. Wie in Figur 4 gezeigt ist die Spannungsmesseinrichtung 10 mit der Steuerungselektronik 9 verbunden. Die Steuerungselektronik 9 der Vorrichtung 6 zum Erfassen eines kritischen Sturzes ist so mit der Steuerungseinrichtung 5 des Akkumulators 1 verbunden, dass elektrische Energie aus den Akku-Zellen 3 durch den ersten, zweiten und dritten Leiter L1, L2, L3 fließt. An dem ersten Leiter L1 liegt damit eine erste elektrische Spannung V1, an dem zweiten Leiter L2 liegt eine zweite elektrische Spannung V2 und an dem dritten Leiter L3 liegt eine dritte Spannung V3 an. Die Spannungsmesseinrichtung 10 erfasst Veränderungen in der die ersten, zweiten und dritten Spannung V1, V2, V3. Die Spannungsmesseinrichtung 10 kann dabei insbesondere erfassen, wenn keine elektrische Spannung mehr an einem der drei Leiter L1, L2, L3 anliegt bzw. wenn eine Spannung V1, V2, V3 gleich Null ist.

In Figur 2 und 4 ist die Vorrichtung 6 zum Erfassen eines kritischen Sturzes in einem unbewegten, d.h. stationären Zustand dargestellt. Der Trägheitskörper 8 befindet sich dabei ungefähr im Zentrum bzw. im Mittelpunkt des Rahmens 7.

In Figur 3 ist die Vorrichtung 6 zum Erfassen eines kritischen Sturzes in einem Zustand dargestellt, bei dem eine gewisse Beschleunigung auf die Vorrichtung 6 einwirkt. Der beschleunigte Zustand findet statt, wenn die Vorrichtung 6 nach einem Sturz aus einer gewissen Höhe auf eine harte, unelastische Oberfläche aufschlägt. Das damit verbundene plötzliche Abbremsen verursacht eine negative Beschleunigung an der Vorrichtung 6. Die Beschleunigung der Vorrichtung 6 als Folge eines Sturzes und die physikalischen Eigenschaften des Trägheitskörpers 8 bewirken, dass der Trägheitskörper 8 relativ zum Rahmen 7 bewegt wird. Durch die in Figur 3 gezeigte Bewegung des Trägheitskörpers 8 relativ zum Rahmen 7 wird eine mechanische Zugkraft bzw. ein Zug auf wenigstens einen Leiter L1, L2, L3 ausgeübt. In Figur 3 ist die Situation dargestellt, in der diese mechanische Zugkraft die Zugfestigkeit (d.h. Reißfestigkeit) übersteigt und der dritte Leiter L1, L2, L3 zerreißt. Hierdurch wird der dritte Stromkreis mit der dritten Spannung V3 unterbrochen. Die Spannungsmesseinrichtung 10 erfasst eine Veränderung bzw. ein Abfall der dritten Spannung V3 im dritten Stromkreis. Die Veränderung der Spannung wird an die Steuerungselektronik 9 in Form eines entsprechenden Signals übermittelt, sodass die Steuerungselektronik 9 einen kritischen Sturz erfasst. Die Steuerungselektronik 9 der Vorrichtung 1 zum Erfassen eines kritischen Sturzes kann die Information, dass ein kritischer Sturz geschehen ist auch an die Steuerungseinrichtung 5 des Akkumulators 1 leiten. Durch die Steuerungseinrichtung 5 des Akkumulators 1 können daraufhin weiterer Maßnahmen ergriffen werden.

Dadurch, dass der Werkstoff des ersten, zweiten und dritten Leiters eine gewisse Zugfestigkeit bzw. Reißfestigkeit aufweist, kommt es erst bei einer gewissen Zugkraft zu einem Zerreißen des Leiters L1, L2, L3 (d.h. zu einem Versagen des Werkstoffs des Leiters). Die für das Zerreißen eines Leiters L1, L2, L3 notwendige Zugkraft steht in einem direkten Zusammenhang mit dem Wert einer Beschleunigung, die in Folge eines Sturzes auf die Vorrichtung 6 ausgeübt wird. Die Zugfestigkeit des Leiters L1, L2, L3 wird so gewählt, dass der Leiter L1, L2, L3 erst ab einer kritischen Fallhöhe bzw. nach dem Sturz aus einer kritischen Höhe zerreißt.

Somit ist es möglich, dass durch die von der Spannungsmesseinrichtung 10 erfassbare Unterbrechung eines der drei Stromkreise ein Sturz aus einer kritischen Fallhöhe ermittelt werden kann.

Eine kritische Fallhöhe bzw. ein kritischer Sturz sind dabei so definiert, dass es aufgrund des Aufschlags bzw. der negativen Beschleunigung beim Aufschlag zu relevanten Beschädigungen an oder in dem Akkumulator 1 kommen kann. Eine relevante Beschädigung liegt beispielsweise bei einem Akkumulator 1 vor, wenn die Gefahr eines Kurzschlusses besteht.

Gemäß einem weiteren Ausführungsbeispiel kann die Entladeeinrichtung 4 des Akkumulators 1 zum kontrollierten Entladen der Energiespeicherzellen 3 durch ein entsprechendes Signal der Steuerungselektronik 9 der Vorrichtung 6 angesteuert und aktiviert werden. Die Entladeeinrichtung 4 entlädt die Energiespeicherzellen 3, wenn das von der Steuerungselektronik 9 gesendete Signal einem signifikanten Spannungsabfall in einer der drei Stromkreise in Folge einer Unterbrechung wenigstens eines Leiters L1, L2, L3 entspricht. Mit anderen Worten: die Entladeeinrichtung 4 entlädt die Akku-Zellen 3, wenn ein Sturz aus einer kritischen Höhe durch einen plötzlichen Spannungsabfall in einer der drei Leiter L1, L2, L3 erfasst wurde.

Nachdem die Akku-Zellen 3 entladen wurden kann die Steuerungselektronik 9 und/oder Steuerungseinrichtung 5 verhindern, dass die Akku-Zellen 3 erneut durch eine Ladevorrichtung wieder mit elektrischer Energie geladen werden. Die Ladevorrichtung ist in den Figuren nicht dargestellt.

Entsprechend einem weiteren Ausführungsbeispiel kann eine Signaleinrichtung 11 mit der Vorrichtung 6 zum Erfassen eines kritischen Sturzes verbunden sein, dass ein Signal ausgegeben werden kann, dass ein Sturz aus einer kritischer Höhe geschehen ist. Die Signaleinrichtung 11 kann ausgestaltet sein, ein akustisches, optisches und/oder elektrisches Signal auszusenden. Bei dem Signal kann es sich auch um ein Funksignal handeln. Das Signal kann dabei auch an die Steuerungseinrichtung 5 des Akkumulators 1 gesendet werden und bewirken, dass nach dem Erfassen eines Sturzes aus einer kritischen Höhe eine weitere Abgabe an elektrischer Energie aus den Akku-Zelle 3 an einen Verbraucher, beispielsweise eine mit dem Akkumulator 1 verbundene Werkzeugmaschine, verhindert wird. Die Werkzeugmaschine ist in den Figuren nicht dargestellt.

## Patentansprüche

1. Vorrichtung (6) zum Erfassen eines kritischen Sturzes enthaltend eine Steuerungselektronik (9) mit wenigstens einer Spannungsmesseinrichtung (10),
**gekennzeichnet durch** wenigstens einen Trägheitskörper (8), der durch drei elektrische Leiter (L1, L2, L3) entlang der drei Hauptträgheitsachsen des Trägheitskörpers (8) gehalten wird, wobei an jeder der drei elektrischen Leiter (L1, L2, L3) eine elektrische Spannung (V1, V2, V3) anliegt und die drei elektrischen Leiter (L1, L2, L3) so ausgestaltet sind, dass beim Erreichen eines vorbestimmten Beschleunigungsschwellwerts für den Trägheitskörper 8 die Leitfähigkeit wenigstens eines elektrischen Leiters (L1, L2, L3) so beeinträchtigt wird, dass das Erreichen eines vorbestimmten Schwellwerts für wenigstens eine elektrische Spannung (V1, V2, V3) von der Spannungsmesseinrichtung (10) erfassbar ist.

2. Vorrichtung (6) nach Anspruch 1,
**dadurch gekennzeichnet, dass** beim Erreichen eines vorbestimmten Beschleunigungsschwellwerts für den Trägheitskörper (8) wenigstens ein elektrischer Leiter (L1, L2, L3) unterbrochen wird.

3. Vorrichtung (6) nach Anspruch 1 oder 2,
**dadurch gekennzeichnet, dass** eine Signaleinrichtung (11) enthalten ist, durch die beim Erreichen eines vorbestimmten Schwellwerts für wenigstens eine elektrische Spannung wenigstens ein Signal ausgesendet wird.

4. Akkumulator (1) mit einer Vorrichtung (6) zum Erfassen eines kritischen Sturzes enthaltend eine Steuerungselektronik (9) mit wenigstens einer Spannungsmesseinrichtung (10), wobei der Akkumulator (1) eine Steuerungseinrichtung (5) mit einer Entladeeinrichtung (4) sowie wenigstens eine Energiespeichereinrichtung (3) enthält,
**dadurch gekennzeichnet, dass** die Vorrichtung (1) zum Erfassen eines kritischen Sturzes wenigstens einen Trägheitskörper (8) enthält, der durch drei elektrische Leiter (L1, L2, L3) entlang der drei Hauptträgheitsachsen des Trägheitskörpers (8) gehalten wird, wobei an jeder der drei elektrischen Leiter (L1, L2, L3) eine elektrische Spannung (V1, V2, V3) anliegt und die drei elektrischen Leiter (L1, L2, L3) so ausgestaltet sind, dass beim Erreichen eines vorbestimmten Beschleunigungsschwellwerts für den Trägheitskörper (8) die Leitfähigkeit wenigstens eines elektrischen Leiters (L1, L2, L3) so beeinträchtigt wird, dass das Erreichen eines vorbestimmten Schwellwerts für wenigstens eine elektrische Spannung (V1, V2, V3) von der Spannungsmesseinrichtung (10) erfassbar ist.

5. Akkumulator (1) nach Anspruch 4,
**dadurch gekennzeichnet, dass** die wenigstens eine Energiespeichereinrichtung (3) durch die Entladeeinrichtung (4) wenigstens teilweise entladen wird, wenn das Erreichen eines vorbestimmten Schwellwerts für wenigstens eine elektrische Spannung (V1, V2, V3) von der Spannungsmesseinrichtung (10) erfassbar ist.

6. Akkumulator (1) nach Anspruch 4 oder 5,
**dadurch gekennzeichnet, dass** die Steuerungselektronik (9) und/oder Steuerungseinrichtung (5) ausgestaltet ist, dass ein Laden der wenigstens einen Energiespeichereinrichtung (3) mit elektrischer Energie verhindert wird, wenn das Erreichen eines vorbestimmten Schwellwerts für wenigstens eine elektrische Spannung (V1, V2, V3) von der Spannungsmesseinrichtung (10) erfassbar ist.

7. Verfahren zum Erfassen eines kritischen Sturzes,
**gekennzeichnet durch** die folgenden Verfahrensschritte:
- Erfassen einer ersten, zweiten und dritten elektrischen Spannung (V1, V2, V3), die jeweils an einem ersten, zweiten und dritten elektrischen Leiter (L1, L2, L3) anliegt, wobei der erste Leiter (L1) entlang einer ersten Hauptträgheitsachse eines Trägheitskörpers (8), der zweite Leiter (L2) entlang einer zweiten Hauptträgheitsachse eines Trägheitskörpers (8) und der dritte Leiter (L3) entlang einer dritten Hauptträgheitsachse eines Trägheitskörpers (8) verläuft; und
- Erfassen eines vorbestimmten Schwellwerts für die erste, zweite oder dritte elektrische Spannung (V1, V2, V3) durch wenigstens eine Spannungsmesseinrichtung (10), wenn beim Erreichen eines vorbestimmten Beschleunigungsschwellwerts für den Trägheitskörper (8) die Leitfähigkeit wenigstens eines elektrischen Leiters (L1, L2, L3) beeinträchtigt wird.

8. Verfahren zum Erfassen eines kritischen Sturzes nach Anspruch 7,
**gekennzeichnet durch** Aussenden wenigstens eines Signals durch eine Signaleinrichtung (11), wenn ein vorbestimmter Schwellwert für wenigstens eine elektrische Spannung (V1, V2, V3) erfassbar ist.
